# EUROPÄISCHE PATENTSCHRIFT

(11) **EP 2 470 328 B1**
(45) Veröffentlichungstag und Bekanntmachung des Hinweises auf die Patenterteilung: **10.01.2018**
(21) Anmeldenummer: 10770510.5
(22) Anmeldetag: 13.09.2010
(51) Int. Cl.: B24B 13/00

(54) **VERFAHREN ZUR FERTIGUNG EINER OPTISCHEN ANORDNUNG MIT MINDESTENS ZWEI OPTISCHEN FUNKTIONSFLÄCHEN AUF EINER GEMEINSAMEN TRAGSTRUKTUR UND VORRICHTUNG ZUR DURCHFÜHRUNG DES VERFAHRENS**
METHOD FOR PRODUCING AN OPTICAL ASSEMBLY HAVING AT LEAST TWO OPTICAL FUNCTIONAL SURFACES, AN OPTICAL DEVICE AND UNIT FOR CARRYING OUT THE METHOD
PROCÉDÉ DE FABRICATION D'UN DISPOSITIF OPTIQUE COMPORTANT AU MOINS DEUX SURFACES FONCTIONNELLES OPTIQUES, APPAREIL OPTIQUE ET DISPOSITIF POUR LA MISE EN OEUVRE DU PROCÉDÉ

(30) Priorität: 14.09.2009 DE 102009041501
(43) Veröffentlichungstag der Anmeldung: 04.07.2012
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: SCHEIDING, Sebastian, 07745 Jena (DE); RISSE, Stefan, 07749 Jena (DE); GEBHARDT, Andreas, 99510 Apolda (DE); DAMM, Christoph, 07743 Jena (DE); PESCHEL, Thomas, 07743 Jena (DE); STEINKOPF, Ralf, 07743 Jena (DE)
(74) Vertreter: Pfenning, Meinig & Partner mbB
(86) Internationale Anmeldenummer: PCT/EP2010/005691
(87) Internationale Veröffentlichungsnummer: WO 2011/029634

(56) Entgegenhaltungen:
- US-A- 5 862 726
- US-B1- 7 209 285
- SCHEIDING S ET AL: "Ultra-precisely manufactured mirror assemblies with well-defined reference structures", PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, Bd. 7739, 16. August 2010 (2010-08-16), XP002613262, ISSN: 0277-786X
- STEINKOPF R ET AL: "Metal mirrors with excellent figure and roughness", PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, Bd. 7102, 2008, XP002613263, ISSN: 0277-786X
- JOHN E. GREIVENKAMP: "Testing aspheric surfaces", JOHN E. GREIVENKAMP, Bd. 1, Nr. 6, Juni 1990 (1990-06), Seiten 25-27, XP002613264, DOI: 10.1364/OPN.1.6.000025
- J WANG, T HIGO: "ACCELERATOR STRUCTURE DEVELOPMENT FOR NLC/GLC", ICFA BEAM DYN. NEWSLETT 2003, 10370, Februar 2004 (2004-02), XP002613438,
- OHL R G ET AL: "Design and fabrication of diamond machined, aspheric mirrors for ground-based, near-IR astronomy", PROCEEDINGS OF THE SPIE - THE INTERNATIONAL SOCIETY FOR OPTICAL ENGINEERING SPIE-INT. SOC. OPT. ENG. USA, Bd. 4841, 2003, Seiten 677-688, XP002634264, ISSN: 0277-786X

## Beschreibung

Die Erfindung betrifft ein Verfahren zur Fertigung einer optischen Anordnung mit mindestens zwei in fester Lagebeziehung zueinander auf einer gemeinsamen Tragstruktur angeordneten optischen Funktionsflächen sowie ein optisches Gerät, das eine solche optische Anordnung umfasst, und eine Vorrichtung, mit der sich das Verfahren durchführen lässt.

Optische Anordnungen, bei denen zwei optische Funktionsflächen definierter Form auf einer gemeinsamen Tragstruktur angeordnet sind, sind z.B. aus Spiegelteleskopen mit gefalteten Strahlengängen bekannt, bei denen die optischen Funktionsflächen durch Spiegel gebildet werden. Die Anordnung auf einer gemeinsamen Tragstruktur bringt dabei den Vorteil mit sich, dass sich eine spätere Justage der Funktionsflächen relativ zueinander erübrigt und dass eine Dejustage ausgeschlossen werden kann. Insbesondere wenn diese Spiegel asphärisch geformt sind, entstehen jedoch bei der Fertigung Schwierigkeiten dadurch, dass die Funktionsflächen nicht nur jeweils eine genau definierte Form erhalten, sondern auch mit ebenfalls hoher Genauigkeit relativ zueinander platziert und orientiert werden müssen.

Aus dem Stand der Technik bekannte Verfahren zur Herstellung einzelner optischer Funktionsflächen sehen vor, dass die Funktionsflächen z.B. in einem Fertigungsschritt mit einer Drehmaschine aus einem Metallrohling gebildet und anschließend vermessen werden, wobei der Fertigungsschritt dann mit geänderten Maschinenparametern wiederholt wird, wodurch eine beim Vermessen festgestellte Abweichung von einer Idealform minimiert werden sollen. Durch Iteration kann die Abweichung von der Idealform dann bis auf Werte im Submikrometerbereich reduziert werden. Dabei wird allerdings eine Lage (mit den Begriffen Lage und Position seien in der vorliegenden Schrift immer Ort und/oder Orientierung bezeichnet) der optischen Funktionsfläche nicht kontrolliert, weil die Abweichung durch ein sogenanntes Fitting bestimmt wird, indem eine durch die Idealform definierte Fläche so über die tatsächlich hergestellte Funktionsfläche gelegt wird, dass eine bestmögliche Übereinstimmung erreicht wird, und die Abweichung dann als verbleibender Unterschied definiert wird. Daher ist das bekannte Verfahren für die Herstellung von optischen Anordnungen skizzierter Art mit mehr als einer Funktionsfläche nicht praktikabel.

Die Druckschrift US 5 862 726 A offenbart ein Verfahren zum Herstellen zweier Teleskopspiegel auf einem gemeinsamen Substrat, bei dem in einem ersten Prozesschritt ein erster Spiegel und in einem zweiten Prozessschritt ein zweiter Spiegel mittels eines Diamant-Drehverfahrens geformt wird. Dabei dient die Fertigung dieser beiden Spiegel auf einem gemeinsamen Substrat der einfacheren Ausrichtung und Justage relativ zu einem weiteren Spiegel. Ein vergleichbarer Stand der Technik ist in der Druckschrift US 7 209 285 B1 gezeigt. Die Veröffentlichung "Metal mirrors with excellent figure and roghness" von R. Steinkopf et al. in Proc. of SPIE Vol. 7102, 2008 beschreibt im Zusammenhang mit der Herstellung von Spiegeln die Wiederholung von Bearbeitungsschritten nach zwischengeschalteten Vermessungsschritten. Weiterer Stand der Technik, der in diesem Zusammenhang von allgemeinem Interesse sein kann, ist in den Veröffentlichungen "Testing aspheric surfaces" von J.E.Greivenkamp in Optics & Photonics News, Vol. 1, No. 6, Juni 1990, "Accelerator Structure Development for NLC/GLC" von J. Wang und T. Higo in ICFA Beam Dyn. Newsletter 2003,10370, Februar 2004 und "Design and fabrication of diamond machined, aspheric mirrors for groundbased, near-IR astronomy" von R.G. Ohl et al. in Proc. of SPIE Vol. 4841, 2003, Seiten 677-688 zu finden.

Der Erfindung liegt die Aufgabe zugrunde, ein Verfahren vorzuschlagen, mit dem optische Anordnungen mit mindestens zwei in fester Lagebeziehung zueinander auf einer gemeinsamen Tragstruktur angeordneten optischen Funktionsflächen definierter Form mit möglichst hoher Genauigkeit - und zwar sowohl bezüglich der Form als auch der relativen Lage der Funktionsflächen - und möglichst geringem insbesondere zeitlichem Aufwand hergestellt werden können. Der Erfindung liegt ferner die Aufgabe zugrunde, eine Vorrichtung zu entwickeln, mit der sich ein derartiges Fertigungsverfahren durchführen lässt, und ein mit entsprechend geringem Aufwand herstellbares optisches Gerät mit einer optischen Anordnung skizzierter Art vorzuschlagen.

Diese Aufgabe wird erfindungsgemäß gelöst durch ein Verfahren mit den Merkmalen des Hauptanspruchs sowie durch ein Verfahren zur Herstellung eines optischen Gerätes mit den Merkmalen des Anspruchs 12 und durch eine Vorrichtung mit den Merkmalen des Anspruchs 14. Vorteilhafte Ausgestaltungen und Weiterentwicklungen der Erfindung ergeben sich mit den Merkmalen der Unteransprüche.

Bei dem vorgeschlagenen Verfahren zur Fertigung einer optischen Anordnung mit mindestens zwei in fester Lagebeziehung zueinander auf einer gemeinsamen Tragstruktur angeordneten optischen Funktionsflächen definierter Form wird zunächst in einem ersten Prozessschritt aus einem durch die Tragstruktur gebildeten oder auf der Tragstruktur angeordneten Rohling durch eine Bearbeitungsmaschine eine erste optische Funktionsfläche mit einer durch eine Ansteuerung der Bearbeitungsmaschine definierten Form hergestellt, in einem zweiten Prozessschritt aus dem genannten Rohling oder einem auf der Tragstruktur angeordneten weiteren Rohling durch die Bearbeitungsmaschine zumindest eine zweite optische Funktionsfläche mit durch die Ansteuerung der Bearbeitungsmaschine definierter Form und definierter relativer Lage zur ersten Funktionsfläche hergestellt und in einem dritten Prozessschritt auf und/oder an der Tragstruktur und/oder dem Rohling und/oder dem weiteren Rohling durch die Bearbeitungsmaschine zumindest eine Referenzstruktur mit definierter und messbarer relativer Lage zu den optischen Funktionsflächen hergestellt, wobei die drei genannten Prozessschritte in beliebiger zeitlicher Folge oder gleichzeitig ausgeführt werden und wobei die Tragstruktur bis zur Vollendung aller dieser drei Prozessschritte fest mit der Bearbeitungsmaschine verbunden bleibt. Dass die drei Prozessschritte in beliebiger Reihenfolge oder gleichzeitig ausgeführt werden, soll auch die Möglichkeit einschließen, dass sie sich teilweise zeitlich überlappen oder auf mehrere Unterschritte verteilt sind, die wiederum in beliebiger Reihenfolge und unter Umständen zum Teil gleichzeitig durchgeführt werden können. Anschließend wird die Form und Lage der mindestens zwei optischen Funktionsflächen auf der Tragstruktur in einem Messaufbau relativ zu der zumindest einen Referenzstruktur vermessen und eine Abweichung der optischen Funktionsflächen von einer Sollform und Sollposition, die relativ zu der mindestens einen Referenzstruktur exakt definiert ist, bestimmt. Danach werden die genannten drei Prozessschritte mindestens einmal mit einer derart geänderten Ansteuerung der Bearbeitungsmaschine wiederholt, dass die genannte Abweichung verringert wird.

Durch die Herstellung der mindestens einen Referenzstruktur und dadurch, dass diese ebenfalls vermessen und die Abweichung relativ dazu bestimmt wird, kann bei der beschriebenen Iteration eine Verringerung von Formfehlern der Funktionsflächen erreicht werden, ohne dass dabei eine Kontrolle über deren Lage verloren geht. Da die Lage beider optischer Funktionsflächen - und ggf. weiterer auf der gleichen Tragstruktur hergestellter optischer Funktionsflächen - jeweils relativ zu der mindestens einen Referenzstruktur bestimmt wird, bleibt dabei auch eine Lagebeziehung zwischen den Funktionsflächen unter Kontrolle. Gleichzeitig mit den Formfehlern kann daher in beschriebener Weise auch eine Ungenauigkeit der relativen Lage der Funktionsflächen zueinander korrigiert werden, so dass die optische Anordnung auch mit einer sehr geringen Zahl von Iterationen der drei Prozessschritte mit ausgesprochen geringer Form- und Lageabweichung gefertigt werden kann. Die nach einem ersten Durchlauf der drei Prozessschritte üblicherweise noch zu große Abweichung lässt sich mit den beschriebenen Maßnahmen deutlich reduzieren, weil diese Abweichung typischerweise zumindest größtenteils auf Fehler zurückzuführen ist, die systematisch sind in dem Sinne, dass sie bei einer Wiederholung der Prozessschritte mit unveränderter Ansteuerung der Bearbeitungsmaschine reproduziert würden.

Ein optisches Gerät vorgeschlagener Art, das eine durch das beschriebene Verfahren hergestellte oder herstellbare optische Anordnung umfasst, lässt sich daher mit vorteilhaft geringem Aufwand mit sehr hoher Präzision anfertigen und bringt den weiteren Vorteil mit sich, dass zumindest die beiden auf der gemeinsamen Tragstruktur angeordneten optischen Funktionsflächen nicht mehr relativ zueinander justiert werden müssen und sich auch nicht dejustieren können. Bei diesem optischen Gerät kann es sich z.B. um ein Teleskop handeln, insbesondere um ein Spiegelteleskop mit gefaltetem Strahlengang. Auch andere optische Anordnungen mit mehrfach gefaltetem Strahlengang können selbstverständlich in der beschriebenen Weise hergestellt werden.

Typischerweise wird es sich dementsprechend bei zumindest einer der optischen Funktionsflächen um einen Spiegel handeln, vorzugsweise um einen Spiegel mit metallischer Spiegeloberfläche, weil sich metallische Flächen gut in der vorgeschlagenen Weise bearbeiten lassen. Die optischen Funktionsflächen können jeweils insbesondere zumindest teilweise plan, konkav, konvex oder frei geformt werden, wobei die Vorteile der Erfindung besonders zur Geltung kommen, wenn zumindest eine der Funktionsflächen mit einer asphärischen Form hergestellt wird, weil dann zusätzlich zur möglichst exakten Form auch die genaue Lage der Funktionsfläche relativ zu der mindestens einen weiteren Funktionsfläche von besonderer Bedeutung für die optische Güte der Anordnung ist.

Eine zur Durchführung des vorgeschlagenen Verfahrens geeignete und daher vorteilhafte Vorrichtung umfasst eine Bearbeitungsmaschine zum Herstellen der mindestens zwei Funktionsflächen und der mindestens einen Referenzstruktur sowie eine davon getrennt angeordnete oder in der Bearbeitungsmaschine integrierte Messvorrichtung zum Vermessen der Funktionsflächen und der mindestens einen Referenzstruktur, wobei die Messvorrichtung programmtechnisch eingerichtet ist, die Abweichung der optischen Funktionsflächen gegenüber einer relativ zu der mindestens einen Referenzstruktur definierten Sollform und Sollposition zu bestimmen. Zusätzlich kann die Messvorrichtung programmtechnisch eingerichtet sein, korrigierte Einstellungswerte für die Bearbeitungsmaschine zu berechnen, durch die die Abweichung bei einer weiteren Durchführung der Prozessschritte zumindest weitgehend kompensiert werden kann. Dabei kann es vorteilhaft sein, wenn die ermittelte Abweichung dazu in ein durch Freiheitsgrade der Bearbeitungsmaschine definiertes Koordinatensystem transformiert wird. Mit Vermessen sei in der vorliegenden Schrift eine möglichst dichte oder flächendeckende Ermittlung von Raumkoordinaten einer Oberfläche bezeichnet oder im Fall identifizierbarer einzelner Punkte oder Linien eine Ermittlung von Raumkoordinaten dieser Punkte bzw. von möglichst dicht liegenden Punkten auf der jeweiligen Linie.

Eine besonders hohe Genauigkeit kann man erreichen, wenn das Bestimmen der Abweichung und das anschließende Wiederholen der drei genannten Prozessschritte mit geänderter Ansteuerung der Bearbeitungsmaschine bei dem Verfahren zum Herstellen der optischen Anordnung deterministisch mehrfach erfolgt, bis die verbleibende Abweichung eine vorgegebene Toleranz unterschreitet.

Zur Bestimmung der genannten Abweichung können die Referenzstruktur und die optischen Funktionsflächen z.B. taktil oder interferometrisch oder mittels einer abbildenden Optik vermessen werden. Unter Umständen kann das Vermessen Schäden auf den Funktionsflächen verursachen, z.B. Kratzspuren im Fall einer taktilen Vermessung. Daher kann es vorgesehen sein, dass nach dem letzten Vermessen, wenn eine hinreichende Genauigkeit festgestellt wird, zumindest die ersten beiden Prozessschritte noch einmal so durchgeführt werden, dass die Funktionsflächen tiefer zu liegen kommen, die Ansteuerung der Bearbeitungsmaschine ansonsten aber unverändert bleibt.

Bei typischen Ausführungen der Erfindung wird zumindest eine der optischen Funktionsflächen, die unter Umständen auch ohne sichtbare Grenze ineinander übergehen können, monolithisch mit der Tragstruktur ausgebildet. Es ist jedoch auch möglich, dass der Rohling, aus dem die erste Funktionsfläche gebildet wird oder, sofern die zweite Funktionsfläche nicht aus demselben Rohling gebildet wird, der weitere Rohling als separates Teil auf der Tragstruktur befestigt wird. In diesem Fall kann es vorgesehen sein, dass der Rohling und/oder der weitere Rohling erst nach Abschluss mindestens eines der genannten Prozessschritte oder zumindest nach dessen Beginn auf der mit der Bearbeitungsmaschine verbundenen Tragstruktur angeordnet wird. Das gilt insbesondere für Fälle, in denen der weitere Rohling, aus dem die zweite optische Funktionsfläche hergestellt wird, bei der beispielsweise mit einem Drehwerkzeug durchgeführten Herstellung der ersten optischen Funktionsfläche im Weg wäre, also in einem Arbeitsraum der Bearbeitungsmaschine im ersten Prozessschritt läge.

Im Verlauf der genannten Prozessschritte können zusätzlich zu den optischen Funktionsflächen und der mindestens einen Referenzstruktur auch eine oder mehrere weitere Strukturen durch die Bearbeitungsmaschine auf und/oder an der Tragstruktur und/oder dem Rohling und/oder dem weiteren Rohling hergestellt werden, deren Abweichung von einer Sollform und Solllage relativ zur mindestens einen Referenzstruktur ebenfalls beim Vermessen bestimmt wird. Dadurch kann auch die mindestens eine weitere Struktur mit optischer Genauigkeit gefertigt werden.

Bei der weiteren Struktur oder den weiteren Strukturen kann es sich z.B. um eine Anlage- und/oder Auflagestruktur zur Anlage bzw. Aufnahme des Rohlings oder des weiteren Rohlings an der Tragstruktur handeln. Dadurch kann sichergestellt werden, dass die optischen Funktionsflächen auch dann in einer genau definierten Lagebeziehung zueinander zu liegen kommen, wenn zumindest eine der Funktionsflächen auf einem Rohling hergestellt wird, der auf die Tragstruktur aufgesetzt und lösbar mit dieser verbunden wird.

Alternativ oder zusätzlich kann die weitere Struktur oder eine der weiteren Struktur auch eine Anlagegeometrie sein, an der anliegend die Tragstruktur in ein optisches Gerät einsetzbar ist und durch die eine Lage der Tragstruktur im optischen Gerät bezüglich zumindest eines Freiheitsgrads, vorzugsweise bezüglich aller translatorischen und rotatorischen Freiheitsgrade, festgelegt ist. Damit kann man erreichen, dass sich auch eine aufwendige Justierung der die zwei optischen Funktionsflächen umfassenden Anordnung relativ zu anderen optischen Komponenten des optischen Geräts erübrigt. Bei in dieser Hinsicht besonders vorteilhaften Ausführungen optischer Geräte hier vorgeschlagener Art ist also eine Position und Orientierung der optischen Anordnung in dem optischen Gerät durch zumindest eine Anlagegeometrie festgelegt, die als weitere Struktur der optischen Anordnung mit optischer Genauigkeit hergestellt ist und mit der die optische Anordnung an einem Träger des optischen Geräts anliegt.

Bei bevorzugten Ausführungen der Erfindung wird an und/oder in der Tragstruktur zumindest eine kinematische Entkopplung hergestellt, die dabei monolithisch mit der Tragstruktur ausgeführt sein kann. Derartige kinematische Entkopplungen, die z.B. mit mindestens einem Festkörpergelenk und/oder zumindest einem Steg und/oder zumindest einer Membran und/oder als Stabwerk ausgeführt werden können, können insbesondere zwischen einem Hauptkörper der Tragstruktur und Anlageflächen vorgesehen sein, mit denen die Tragstruktur an einem Träger eines optischen Geräts oder einem Träger einer der optischen Flächen anliegend oder zumindest mit festem maßlichen Bezug verbaut wird, um eine Verformung der optischen Flächen durch mechanische Spannungen zu verhindern.

Typischerweise weist die Bearbeitungsmaschine ein Drehwerkzeug auf, wobei zumindest einer der genannten Prozessschritte durch das Drehwerkzeug durchgeführt wird. Vorzugsweise weist das Drehwerkzeug oder die Drehmaschine dabei als spanabhebendes Element einen Diamanten auf, womit sich das Drehwerkzeug insbesondere für die Herstellung der optischen Funktionsflächen aus metallischen Rohlingen eignet. In jedem Fall können die zwei Funktionsflächen oder zumindest zwei der optischen Funktionsflächen eine gemeinsame Drehachse aufweisen, um welche die Tragstruktur in der Bearbeitungsmaschine zur Herstellung dieser Funktionsflächen gedreht wird.

Bei der Verwendung eines Drehwerkzeugs kann es vorgesehen sein, dass die Tragstruktur vor Beginn der genannten Prozessschritte mit einer beispielsweise als Scheibe ausgeführten Halterung verbunden wird - z.B. auf die Scheibe aufgekittet wird - und bis zur Vollendung des Verfahrens auf dieser Halterung verbleibt. Diese Halterung kann zum Drehen der Funktionsflächen und gegebenenfalls für andere Prozessschritte drehbar auf einer Achse der Bearbeitungsmaschine angeordnet sein. Wenn die Messvorrichtung, mit der die Funktionsflächen und die Referenzstrukturen vermessen werden, räumlich von der Bearbeitungsmaschine getrennt ist, kann die Tragstruktur dann zum Vermessen zusammen mit der Halterung von der Bearbeitungsmaschine getrennt und für die Iteration der Prozessschritte wieder auf die Bearbeitungsmaschine aufgespannt werden, was das Verfahren erleichtert.

Da sich nicht alle denkbaren und für optische Anordnungen hier beschriebener Art zweckmäßigen Strukturen und Geometrien durch Drehen herstellen lassen, können unter Umständen einer oder mehrere der genannten Prozessschritte auch durch ein Fräswerkzeug durchgeführt werden, dass dann als weitere Komponente der Bearbeitungsmaschine vorgesehen ist und vorzugsweise wieder einen Diamanten als spanabhebendes Element aufweist.

Besonders einfach fällt das vorgeschlagene Verfahren aus, wenn die genannten Prozessschritte durch ein für alle genannten Prozessschritte gleiches Werkzeug der Bearbeitungsmaschine durchgeführt werden, weil sich dann Fehler vermeiden lassen, die andernfalls durch geringfügige unkontrollierte Schwankungen einer relativen Lage verschiedener Werkzeuge der Bearbeitungsmaschine verursacht werden könnten.

Bei typischen Ausführungen des Verfahrens weist die Bearbeitungsmaschine jedoch sowohl mindestens ein Drehwerkzeug als auch mindestens ein Fräswerkzeug auf, wobei die Prozessschritte zur Strukturierung der optischen Funktionsflächen und der Referenzstruktur dann teilweise durch das mindestens eine Drehwerkzeug und teilweise durch das mindestens eine Fräswerkzeug, die vorzugsweise jeweils einen Diamanten als spanabhebendes Element aufweisen, durchgeführt werden. Dabei kann die Bearbeitung durch das Drehwerkzeug und das Fräswerkzeug in einer festen Werkzeuganordnung nacheinander oder abwechselnd durchgeführt werden. Bei einer Bearbeitung durch verschiedene Werkzeuge - insbesondere durch ein Fräswerkzeug und ein Drehwerkzeug - sollten diese verschiedenen Werkzeuge der Bearbeitungsmaschine selbstverständlich in einer bekannten und vorzugsweise festen Lagebeziehung zueinander stehen. Es ist aber auch denkbar, dass ein Fräskopf des Fräswerkzeugs relativ zu dem spanabhebenden Element des Drehwerkzeugs beweglich ausgeführt ist, sofern nur trotzdem die relative Lage des einen Werkzeugs zum anderen jeweils genau bekannt ist.

Um eine Vermessung der Funktionsflächen relativ zu der mindestens einen Referenzstruktur zu ermöglichen, ist oder sind letztere so ausgeführt, dass sie zumindest einen Punkt und/oder zumindest eine Linie und/oder zumindest eine Fläche definiert bzw. definieren. Dazu können die Referenzstrukturen z.B. zumindest eine sphärisch konkave Fläche und/oder zumindest eine zylinderförmige Fläche aufweisen oder bilden oder kreuzförmig ausgeführt sein. Um eine hinreichend genaue Vermessung möglich zu machen, kann die mindestens eine Referenzstruktur mit optischer Oberflächengüte hergestellt werden. Dadurch kann sie ggf. so gestaltet werden, dass sie gemeinsam mit zumindest einer der optischen Funktionsflächen interferometrisch vermessen werden kann.

Die Referenzstrukturen sollten so ausgestaltet werden, dass anhand der Referenzstrukturen die Form und/oder Position zumindest einer der optischen Funktionsflächen relativ zu den Referenzstrukturen bezüglich einer, zweier oder vorzugsweise aller Raumrichtungen und/oder ihre Orientierung bezüglich einer, mehrerer oder vorzugsweise aller Raumachsen eindeutig bestimmbar ist. Dazu können z.B. zwei, drei oder bis zu sechs Referenzstrukturen hergestellt werden.

Zum Bestimmen der Abweichung der Funktionsflächen von der mit Bezug auf die Referenzstrukturen definierten Sollform und Sollposition können z.B. zunächst die Referenzstrukturen und dann die optischen Funktionsflächen in Relation zu den Referenzstrukturen vermessen werden. Dabei kann mittels der Referenzstrukturen zunächst eine Position eines Koordinatenursprungs bestimmt werden, der während der Prozessschritte mit Bezug auf die Bearbeitungsmaschine eindeutig definiert ist, so dass dann die optischen Funktionsflächen in Relation zu dem Koordinatenursprung vermessen werden können, die vermessenen Funktionsflächen also in einem Koordinatensystem mit diesem Koordinatenursprung angegeben werden können. Wenn die Bearbeitungsmaschine eine Drehmaschine ist oder ein Drehwerkzeug umfasst, kann der Koordinatenursprung dabei z.B. durch einen Punkt auf der Drehachse gegeben sein und vorzugsweise dort liegen, wo die Drehachse eine Oberfläche der optischen Anordnung durchstößt.

Ein Ausführungsbeispiel der Erfindung wird nachfolgend anhand der Figuren 1 bis 7 erläutert. Es zeigt
- Fig. 1: einen Querschnitt durch ein Teleskop als Beispiel für ein erfindungsgemäßes optisches Gerät,
- Fig. 2: eine perspektivisch dargestellte optische Anordnung, die Bestandteil des Teleskops aus Fig. 1 ist,
- Fig. 3: in entsprechender Darstellung einen Bestandteil der optischen Anordnung aus Fig. 2,
- Fig. 4: als Schnittzeichnung ein Detail der optischen Anordnung aus Fig. 2 an einer Stelle, an der diese optische Anordnung mit einem Träger des Teleskops aus Fig. 1 verbunden wird,
- Fig. 5: eine perspektivische Ansicht einer Bearbeitungsmaschine, mit der optische Funktionsflächen der optischen Anordnung aus Fig. 2 hergestellt werden,
- Fig. 6: in perspektivischer Darstellung eine Messvorrichtung zum Vermessen dieser optischen Funktionsflächen und
- Fig. 7: ein Diagramm, das veranschaulicht, wie eine optische Güte der optischen Anordnung durch eine Iteration von mit der Bearbeitungsmaschine durchgeführten Prozessschritten und mit der Messvorrichtung durchgeführten Vermessungen verbessert wird.

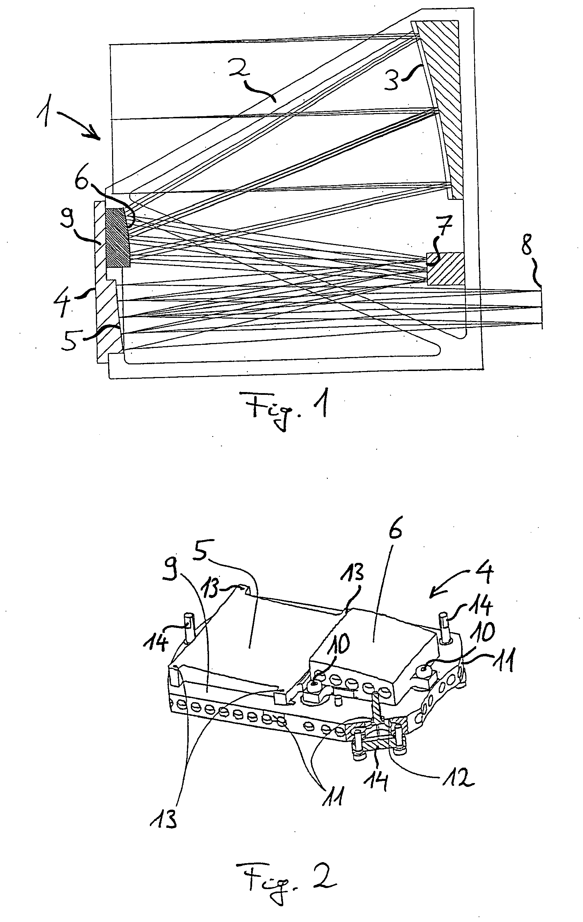

In Fig. 1 ist ein Teleskop 1 zu erkennen, bei dem sich um ein Spiegelteleskop mit mehrfach gefaltetem Strahlengang handelt. Dieses Teleskop 1 weist einen als Stabwerk ausgeführten Träger 2 auf, an dem insbesondere ein konkaver Primärspiegel 3 und an einem gegenüberliegenden Ende eine optische Anordnung 4 befestigt sind.

Die optische Anordnung 4, die in Fig. 2 isoliert dargestellt ist, weist eine erste optische Funktionsfläche 5 und eine daneben angeordnete zweite optische Funktionsfläche 6 auf. Bei der zweiten Funktionsfläche 6 handelt es sich um einen asphärisch konvex gekrümmten Spiegel, der einen Sekundärspiegel des Teleskops 1 bildet, während die erste optische Funktionsfläche 5 durch einen asphärisch konkav gekrümmten Spiegel gegeben ist, auf den in das Teleskop 1 einfallendes Licht nach einer Reflexion am Primärspiegel 3, einer zweiten Reflexion an der Funktionsfläche 6 und einer weiteren Reflexion an einem planaren Faltspiegel 7 fällt. So entsteht im Strahlengang hinter der ersten optischen Funktionsfläche 5 in einer Bildebene 8 ein reelles Bild. Die beiden optischen Funktionsflächen 5 und 6 sind in fester Lagebeziehung zueinander auf einer gemeinsamen metallischen Tragstruktur 9 angeordnet. Die erste optische Funktionsfläche 5 ist bei dem vorliegenden Ausführungsbeispiel monolithisch mit der Tragstruktur 9 gebildet, während die zweite optische Funktionsfläche 6 durch eine Oberfläche eines weiteren metallischen Trägers gebildet ist, der an drei Befestigungspunkten 10 mit der Tragstruktur 9 verbunden ist. Bei einer Abwandlung der dargestellten Ausführung könnte selbstverständlich auch die erste optische Funktionsfläche 5 einen eigenen Träger aufweisen und auf die Tragstruktur 9 aufgesetzt sein. Auch können die optischen Funktionsflächen 5 und 6, die jeweils eine metallische Spiegeloberfläche aufweisen, bei Abwandlungen der hier beschriebenen optischen Anordnung 4 anders geformt sein. Insbesondere könnte auch eine der Funktionsflächen 5 oder 6 durch einen Planspiegel gegeben sein.

Die Tragstruktur 9 weist mehrere mit optischer Güte hergestellte Anlageflächen 11 auf, mit denen die optische Anordnung 4 an bestimmten Stellen des Trägers 2 anliegt, wenn sie in das Teleskop 1 eingebaut ist. Dadurch ist eine Position und Orientierung der optischen Anordnung 4 im Teleskop 1 eindeutig und mit so hoher Genauigkeit festgelegt, dass nach einem Einbau der optischen Anordnung 4 keine weitere Justierung notwendig ist. Um zu verhindern, dass sich die optische Anordnung 4 verzieht, wenn sie mit dem Träger 2 verbunden wird, sind in einer Umgebung dreier der Anlageflächen 11, an denen die Tragstruktur 9 fest mit dem Träger 2 verbunden wird, kinematische Entkopplungen 12 vorgesehen. Schließlich sind in Fig. 2 vier Referenzstrukturen 13 zu erkennen, bei denen es sich im vorliegenden Ausführungsbeispiel jeweils um eine sphärisch konkave Fläche sehr kleinen Durchmessers von etwa 1,5 mm, also um eine Kuhle, handelt und die außerhalb eines Qualitätsbereichs der ersten optischen Funktionsfläche 5 angeordnet sind und im vorliegenden Fall ein Quadrat aufspannen und die jeweils einen Punkt, nämlich den zentralen und tiefsten Punkt der jeweiligen Kuhle, definieren.

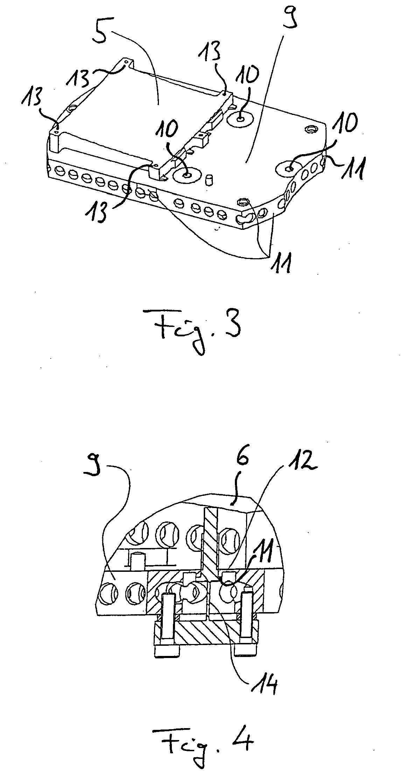

In Fig. 3 ist die Tragstruktur 9 mit der ersten optischen Funktionsfläche 5 noch einmal ohne den Träger der zweiten optischen Funktionsfläche 6 dargestellt. Wiederkehrende Merkmale sind dort, wie auch in den übrigen Figuren, mit den gleichen Bezugszeichen versehen.

Fig. 4 zeigt als Schnittzeichnung einen Ausschnitt der optischen Anordnung 4, der auch in Fig. 2 geschnitten dargestellt ist. Dort ist die kinematische Entkopplung 12 genauer zu erkennen, die monolithisch mit der Tragstruktur 9 hergestellt und als Membran ausgeführt ist. Diese Membran verbindet eine der Anlageflächen 11 mit einem Grundkörper der Tragstruktur 9. Zu erkennen ist in Fig. 4 auch eines von drei axial fixierten Befestigungselementen 14, das als externe Referenz für eine genau positionierte Befestigung der optischen Anordnung 4 dient und der als lösbarer Bestandteil des Trägers 2 verstanden sei.

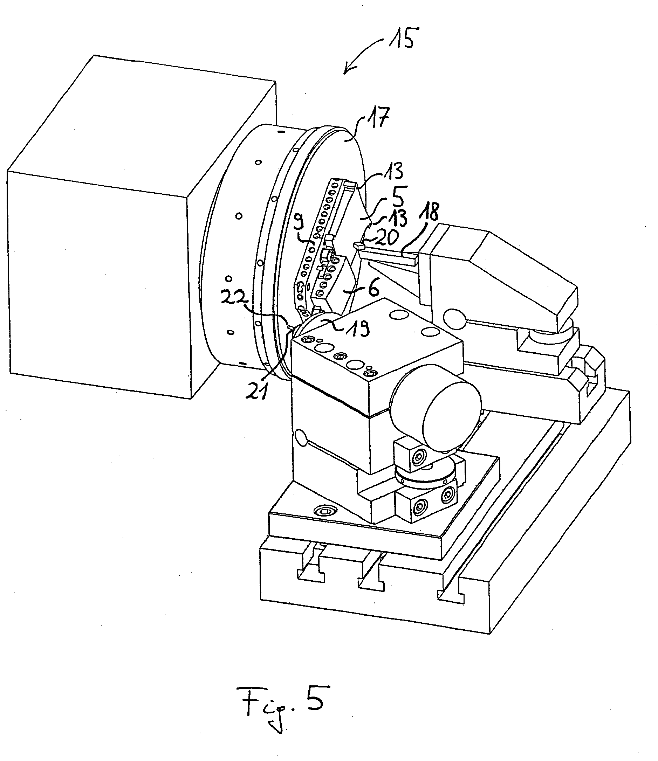

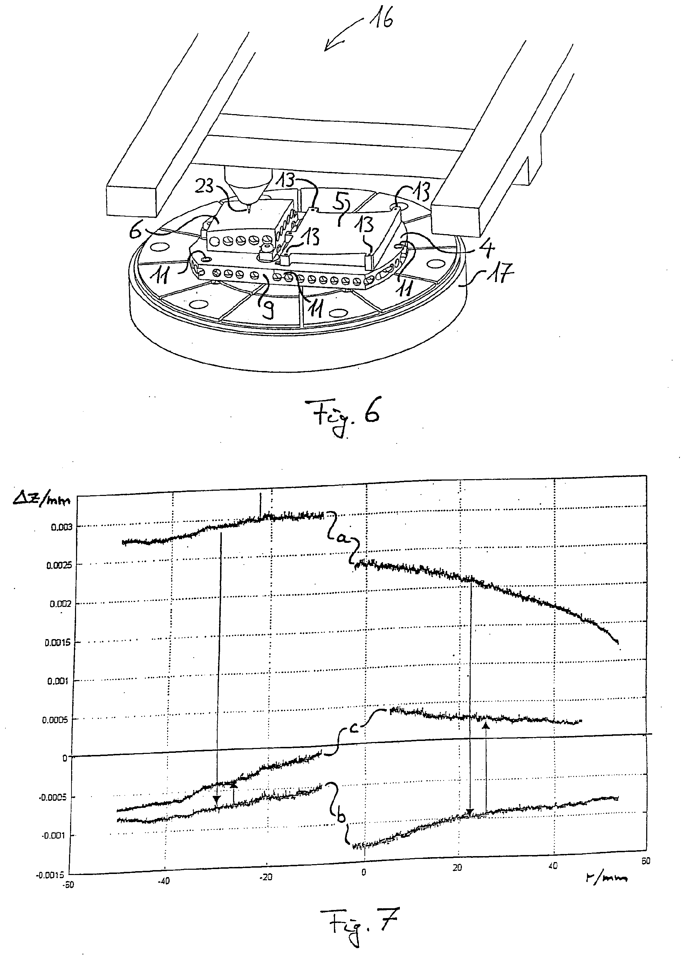

Eine Vorrichtung zur Herstellung der optischen Anordnung 4 umfasst eine in Fig. 5 dargestellte Bearbeitungsmaschine 15 zum Herstellen der Funktionsflächen 5 und 6 und der Referenzstrukturen 13 sowie eine im vorliegenden Ausführungsbeispiel davon getrennt angeordnete Messvorrichtung 16 zum Vermessen der Funktionsflächen 5 und 6 und der Referenzstrukturen 13, die in Fig. 6 abgebildet ist. Eine als Drehscheibe ausgeführte Halterung 17 sitzt auf einer motorisch angetriebenen Achse der Bearbeitungsmaschine 15 und kann dadurch in Drehbewegung versetzt werden. Dabei weist die Bearbeitungsmaschine 15 ein Drehwerkzeug 18 und ein Fräswerkzeug 19 auf. Das Drehwerkzeug 18, das einen Diamanten 20 als spanabhebendes Element aufweist, kann mit Hilfe von Servomotoren auf die Halterung 17 zu und von dieser weg bewegt werden, und zwar bei Bedarf mit hoher Geschwindigkeit oder Frequenz, sowie radial zur Drehachse der Bearbeitungsmaschine 15 verschoben werden. Das Fräswerkzeug 19 weist einen ebenfalls motorisch in beliebiger Richtung verschiebbaren Fräskopf 21 mit einem spanabhebenden Element 22 auf, das ebenfalls durch einen Diamanten gegeben ist. Sowohl der Fräskopf 21 als auch das Drehwerkzeug 18 können dabei mit einer Genauigkeit im Submikrometerbereich kontrolliert relativ zur Halterung 17 bewegt werden und befinden sich damit auch jeweils in einer genau kontrollierbaren und vorzugsweise festen Lagebeziehung zueinander. Die Messvorrichtung 16, die bei anderen Ausführungen der Erfindung auch in der Bearbeitungsmaschine 15 integriert sein könnte, ist im vorliegenden Ausführungsbeispiel für eine taktile Vermessung der Funktionsflächen 5 und 6 und der Referenzstrukturen 13 ausgelegt und weist dazu einen Messstift 23 auf, der kontrolliert über die zu vermessenden Flächen geführt werden kann, so dass diese dadurch gescannt werden. Eine in der Fig. 6 nicht dargestellte Rechnereinheit der Messvorrichtung 16 ist programmtechnisch dazu eingerichtet, eine Abweichung der optischen Funktionsflächen 5 und 6 gegenüber einer relativ zu den Referenzstrukturen 13 definierten Sollform und Sollposition zu bestimmen. Zusätzlich ist sie dazu eingerichtet, die so ermittelte Abweichung in ein durch Freiheitsgrade der Bearbeitungsmaschine definiertes Koordinatensystem zu transformieren und korrigierte Einstellwerte für die Bearbeitungsmaschine 15 zu berechnen, durch die sich die ermittelte Abweichung bei einer weiteren Bearbeitung der optischen Anordnung 4 durch die Bearbeitungsmaschine 15 zumindest weitgehend kompensieren lässt.

Nachfolgend wird beschrieben, wie die optische Anordnung 4 mit Hilfe der Bearbeitungsmaschine 15 und der Messvorrichtung 16 hergestellt wird.

Zunächst wird die in Leichtbauweise ausgeführte Tragstruktur 9 auf die Halterung 17 aufgekittet, von der sie erst am Ende des Herstellungsverfahrens wieder gelöst wird.

Dann werden mit der Bearbeitungsmaschine 15 vier verschiedene Prozessschritte durchgeführt, wobei die Halterung 17 mit der Tragstruktur 9 bis zur Vollendung dieser Prozessschritte auf der Achse der Bearbeitungsmaschine 15 aufgespannt und dadurch fest mit der Bearbeitungsmaschine 15 verbunden bleibt. Dabei wird in einem ersten Prozessschritt aus einem durch die Tragstruktur 9 gebildeten Rohling mittels des Drehwerkzeugs 18 die erste optische Funktionsfläche 5 hergestellt, die dabei eine durch eine Ansteuerung der Bearbeitungsmaschine 15 definierte Form erhält. Dann wird der Träger der zweiten optischen Funktionsfläche 6 als weiterer Rohling auf die Tragstruktur 9 aufgesetzt und an den Befestigungspunkten 10 mit dieser zusammengefügt. In einem zweiten Prozessschritt wird dann wieder mittels des Drehwerkzeugs 18 aus dem weiteren Rohling die zweite optische Funktionsfläche 6 hergestellt, und zwar mit einer Form und einer relativen Lage zur ersten Funktionsfläche 5, die wieder durch die Ansteuerung der Bearbeitungsmaschine 15 definiert wird. In einem dritten Prozessschritt, der auch vor dem zweiten Prozessschritt durchgeführt werden kann, werden mit dem Fräswerkzeug 19 die Referenzstrukturen 13 auf dem durch die Tragstruktur 9 gebildeten Rohling mit definierter und messbarer relativer Lage zu den optischen Funktionsflächen 5 und 6 hergestellt. In einem weiteren Prozessschritt werden mit dem Fräswerkzeug 19 und unter Umständen teilweise auch mit dem Drehwerkzeug 18 die Anlageflächen 11 gebildet, von denen drei auf den Membranen der kinematischen Entkopplungen 12 zu liegen kommen.

Alternativ oder zusätzlich zu den Membranen könnten die kinematischen Entkopplungen 12 auch mit anderen Festkörpergelenken ausgeführt werden und dazu z. B. Stege aufweisen oder als Stabwerk ausgeführt sein. Die optischen Funktionsflächen 5 und 6 werden bei ihrer Herstellung mit dem Drehwerkzeug 18 um eine gemeinsame Drehachse gedreht, die durch die Achse der Bearbeitungsmaschine 15 gegeben ist. Die vier beschriebenen Prozessschritte können auch in anderer zeitlicher Reihenfolge und unter Umständen auch teilweise gleichzeitig durchgeführt werden. Zusätzlich können mit den beschriebenen Prozessschritten auch andere Strukturen auf der Tragstruktur 9 oder dem weiteren Rohling hergestellt werden, beispielsweise optische Gitter oder Anlagestrukturen für den Träger der zweiten optischen Funktionsfläche 6 um die Befestigungspunkte 10. Auch wäre es denkbar, dass der Rohling für die erste optische Funktionsfläche nicht durch die Tragstruktur 9 selbst gebildet wird, sondern, ähnlich dem Träger der zweiten optischen Funktionsfläche 6, durch ein in entsprechender Weise auf die Tragstruktur 9 gefügtes separates Bauteil. Bei anderen Ausführungen des Verfahrens, insbesondere bei einer anderen Geometrie der optischen Anordnung 4, können die genannten Prozessschritte auch durch ein für alle Prozessschritte gleiches Werkzeug der Bearbeitungsmaschine 15 durchgeführt werden, beispielsweise ausschließlich durch das Fräswerkzeug 19. Anstelle der vier im vorliegenden Ausführungsbeispiel vorgesehenen Referenzstrukturen 13 können auch anders gestaltete Referenzstrukturen vorgesehen werden, beispielsweise solche, die jeweils eine Linie oder eine Fläche definieren. Eine solche Referenzstruktur könnte z. B. auch durch eine zylinderförmige Fläche gebildet werden. Abhängig davon, wie die Referenzstrukturen 13 geformt sind, können diese auch in abweichender Zahl vorgesehen sein, so dass unter Umständen auch nur zwei oder drei oder auch z.B. bis zu sechs Referenzstrukturen 13 in dem geschilderten dritten Prozessschritt hergestellt werden können. In jedem Fall sollten die Referenzstrukturen 13, die alternativ oder zusätzlich auch an dem Träger der zweiten optischen Funktionsfläche 6 vorgesehen sein könnten, so ausgeführt werden, dass sie ein Koordinatensystem aufspannen, mit Bezug auf welches die Form, Position und Orientierung der optischen Funktionsflächen 5 und 6 eindeutig definiert werden können.

Nach den beschriebenen Prozessschritten, die mit der Bearbeitungsmaschine 15 durchgeführt werden, werden die Form und die Lage der optischen Funktionsflächen 5 und 6 auf der Tragstruktur 9 mit der Messvorrichtung 16 relativ zu den Referenzstrukturen 13 vermessen, wobei eine Abweichung der optischen Funktionsflächen 5 und 6 von einer Sollform und einer Sollposition, die relativ zu den Referenzstrukturen 13 exakt definiert sind, bestimmt wird. Dazu wird die Halterung 17 mit der Tragstruktur 9 von der Achse der Bearbeitungsmaschine 15 abgenommen und, wie in Fig. 6 gezeigt, in der Messvorrichtung 16 platziert. Bei der Vermessung der Referenzstrukturen 13 und der Funktionsflächen 5 und 6 wird auch eine Abweichung der Anlageflächen 11 und gegebenenfalls weiterer Strukturen von einer Sollform und Solllage relativ zu den Referenzstrukturen bestimmt. Im vorliegenden Ausführungsbeispiel erfolgt das Vermessen taktil, indem der Messstift 23 der Messvorrichtung 16 über die zu vermessenden Flächen geführt wird. Bei anderen Ausführungen können die Referenzstrukturen 13 und die optischen Funktionsflächen 5 und 6 zur Bestimmung der genannten Abweichung alternativ oder zusätzlich auch interferometrisch vermessen werden. Das wird dadurch möglich, dass nicht nur die optischen Funktionsflächen 5 und 6, sondern auch die Referenzstrukturen 13 - wie auch die Anlageflächen 11 - mit optischer Oberflächengüte hergestellt werden.

Zum Bestimmen der Abweichung der optischen Funktionsflächen 5 und 6 von ihrer Sollform und Solllage werden in der Messvorrichtung 16 zunächst die Referenzstrukturen 13 vermessen, also deren Positionen ermittelt, worauf die optischen Funktionsflächen 5 und 6 in Relation zu diesen Referenzstrukturen 13 vermessen werden. Dabei wird wiederum zunächst mit Hilfe der vermessenen Referenzstrukturen 13 ein Ort eines Koordinatenursprungs bestimmt, der im vorliegenden Ausführungsbeispiel so gewählt wird, dass er auf der Drehachse der Bearbeitungsmaschine 15 liegt, genauer dort, wo diese Drehachse eine Oberfläche der optischen Anordnung 4 durchstößt. Dieser Drehpunkt und Koordinatenursprung kann im vorliegenden Ausführungsbeispiel dadurch sehr einfach aufgefunden werden, dass er genau zwischen zwei der vier Referenzstrukturen 13 liegt, während die anderen beiden Referenzstrukturen 13 auf einem größeren Kreis mit einem durch den genannten Drehpunkt und Koordinatenursprung definierten Mittelpunkt liegen. Die Koordinaten der vermessenen optischen Funktionsflächen 5 und 6 sowie der Anlageflächen 11 werden dann in einem Koordinatensystem mit diesem Koordinatenursprung angegeben. Da die Referenzstrukturen durch die Bearbeitungsmaschine 15 hergestellt sind, handelt es sich bei diesem Koordinatensystem um ein System, das eine definierte Lage mit Bezug auf die Bearbeitungsmaschine 15 hat, wenn die Halterung 17 wieder mit der Bearbeitungsmaschine verbunden wird. In beschriebener Weise wird also das Maschinenkoordinatensystem der Bearbeitungsmaschine 15 in der - vorerst halbfertigen - optischen Anordnung 4 wieder aufgefunden, was es erlaubt, die genannte Abweichung von Form und Lage der optischen Funktionsflächen 5 und 6 nicht nur relativ zu den Referenzstrukturen 13, sondern damit auch relativ zur Bearbeitungsmaschine 15 zu bestimmen. Daher können Fehler sowohl der Form als auch der Lage und insbesondere der relativen Lage der Funktionsflächen 5 und 6 zueinander durch die nachfolgend beschriebenen Maßnahmen drastisch reduziert werden. Vorzugsweise wird das genannte Koordinatensystem, in dem auch die Abweichung gegenüber der Sollform und der Solllage bestimmt wird, ferner so orientiert, dass eine Koordinatenachse mit der Drehachse übereinstimmt, die wiederum einem Freiheitsgrad des beweglichen Drehwerkzeugs 18 und des Fräskopfs 19 entspricht.

Nachdem die beschriebenen Prozessschritte ein erstes Mal durchgeführt und die Funktionsflächen 5 und 6 sowie die Anlageflächen 11 ein erstes Mal vermessen sind, werden die vier beschriebenen Prozessschritte mindestens einmal wiederholt, und zwar mit einer derart geänderten Ansteuerung der Bearbeitungsmaschine 15, dass die beim Vermessen ermittelte Abweichung verringert wird. Das Bestimmen der Abweichung durch die Messvorrichtung 16 und das anschließende Wiederholen der Prozessschritte mit einer in Abhängigkeit von der gemessenen Abweichung geänderten Ansteuerung der Bearbeitungsmaschine 15 kann dabei mehrfach hintereinander erfolgen, bis durch diese Iteration die am Schluss verbleibende Abweichung eine vorgegebene Toleranz im Submikrometerbereich unterschreitet.

Dass dadurch schon mit sehr wenigen Iterationsschritten eine außerordentlich hohe Genauigkeit erreicht werden kann, und zwar sowohl bezüglich der Form der optischen Funktionsflächen 5 und 6 als auch bezüglich deren relativer Lage zueinander, ist in Fig. 7 zu erkennen. Dort ist eine Abweichung Δz der nach einer erstmaligen Durchführung der genannten Prozessschritte gemessenen Funktionsflächen 5 und 6 gegenüber einer Idealfläche für einen durch den Koordinatenursprung verlaufenden Schnitt durch die Funktionsflächen 5 und 6 mit a gekennzeichnet. Das entsprechende Ergebnis einer zweiten Vermessung nach einer zweiten Durchführung der Prozessschritte mit geänderter Ansteuerung der Bearbeitungsmaschine 15 ist in der gleichen Figur mit b gekennzeichnet. In diesem Beispiel ist die Korrektur der Ansteuerung für den zweiten Durchlauf der Prozessschritte offensichtlich zu groß ausgefallen, weshalb die Ansteuerung noch einmal geringfügig geändert wird. Nach einem dritten Durchlauf der Prozessschritte ergeben sich dann die in Fig. 7 mit c gekennzeichneten Werte für die Abweichung Δz, die vollständig im Submikrometerbereich liegen.

## Patentansprüche

1. Verfahren zur Fertigung einer optischen Anordnung (4) mit mindestens zwei in fester Lagebeziehung zueinander auf einer gemeinsamen Tragstruktur (9) angeordneten Spiegeln, die durch optische Funktionsflächen (5, 6) definierter Form gebildet werden,
wobei bei dem Verfahren
in einem ersten Prozessschritt durch eine Bearbeitungsmaschine (15) aus einem durch die Tragstruktur (9) gebildeten oder auf der Tragstruktur (9) angeordneten Rohling eine erste optische Funktionsfläche (5) mit einer durch eine Ansteuerung der Bearbeitungsmaschine (15) definierten Form hergestellt wird,
in einem zweiten Prozessschritt durch die Bearbeitungsmaschine (15) aus dem genannten Rohling oder einem auf der Tragstruktur (9) angeordneten weiteren Rohling zumindest eine zweite optische Funktionsfläche (6) mit durch die Ansteuerung der Bearbeitungsmaschine (15) definierter Form und definierter relativer Lage zur ersten Funktionsfläche (5) hergestellt wird und
in einem dritten Prozessschritt durch die Bearbeitungsmaschine (15) auf und/oder an der Tragstruktur (9) und/oder dem Rohling und/oder dem weiteren Rohling zumindest eine Referenzstruktur (13) mit definierter und messbarer relativer Lage zu den optischen Funktionsflächen (5, 6) hergestellt wird, so dass die mindestens eine Referenzstruktur zumindest einen Punkt und/oder zumindest eine Linie und/oder zumindest eine Fläche definiert,
wobei die Tragstruktur (9) bis zur Vollendung aller der genannten drei Prozessschritte, die in beliebiger zeitlicher Folge oder gleichzeitig ausgeführt werden, fest mit der Bearbeitungsmaschine (15) verbunden bleibt und
wobei anschließend die Form und die Lage der mindestens zwei optischen Funktionsflächen (5, 6) auf der Tragstruktur (9) in einem Messaufbau relativ zu der zumindest einen Referenzstruktur (13) vermessen werden und eine Abweichung der optischen Funktionsflächen (5, 6) von einer Sollform und Sollposition, die relativ zu der zumindest einen Referenzstruktur (13) exakt definiert ist, bestimmt wird,
wonach die genannten drei Prozessschritte mindestens einmal mit einer derart geänderten Ansteuerung der Bearbeitungsmaschine (15) wiederholt werden, dass die genannte Abweichung verringert wird.

2. Verfahren nach dem vorhergehenden Anspruch, **dadurch gekennzeichnet, dass** das Bestimmen der Abweichung und das anschließende Wiederholen der drei genannten Prozessschritte mit geänderter Ansteuerung der Bearbeitungsmaschine (15) deterministisch mehrfach erfolgt, bis die verbleibende Abweichung eine vorgegebene Toleranz unterschreitet.

3. Verfahren nach einem der vorhergehenden Ansprüche, **dadurch gekennzeichnet, dass** der Rohling und/oder der weitere Rohling erst nach Beginn oder Abschluss mindestens eines der genannten Prozessschritte auf der mit der Bearbeitungsmaschine (15) verbundenen Tragstruktur (9) angeordnet wird.

4. Verfahren nach einem der vorhergehenden Ansprüche, wobei zumindest einer der genannten Prozessschritte durch ein Drehwerkzeug (18) der Bearbeitungsmaschine (15) oder durch ein Fräswerkzeug (19) der Bearbeitungsmaschine (15) durchgeführt wird.

5. Verfahren nach einem der vorhergehenden Ansprüche, **dadurch gekennzeichnet, dass** die Prozessschritte zur Strukturierung der optischen Funktionsflächen (5, 6) und der mindestens einen Referenzstruktur (13) teilweise mit mindestens einem Drehwerkzeug (18) und teilweise mit mindestens einem Fräswerkzeug (19) der Bearbeitungsmaschine (15) durchgeführt werden, wobei die Bearbeitung durch das Drehwerkzeug (18) und das Fräswerkzeug (19) in einer festen Werkzeuganordnung nacheinander oder abwechselnd durchgeführt werden.

6. Verfahren nach einem der vorhergehenden Ansprüche, wobei die optischen Funktionsflächen (5, 6) plan oder konkav oder konvex oder frei geformt oder mit einer Kombination solcher Formen gebildet werden.

7. Verfahren nach einem der vorhergehenden Ansprüche, wobei die zumindest eine Referenzstruktur (13) zumindest eine sphärisch konkave Fläche und/oder zumindest eine zylinderförmige Fläche bildet oder kreuzförmig ausgeführt ist.

8. Verfahren nach einem der vorhergehenden Ansprüche, **dadurch gekennzeichnet, dass** die mindestens eine Referenzstruktur (13) und/oder die optischen Funktionsflächen (5, 6) zur Bestimmung der genannten Abweichung taktil und/oder interferometrisch und/oder mittels einer abbildenden Optik vermessen wird.

9. Verfahren nach einem der vorhergehenden Ansprüche, wobei die mindestens eine Referenzstruktur (13) mit optischer Oberflächengüte hergestellt wird und/oder so hergestellt werden, dass sie gemeinsam mit zumindest einer der optischen Funktionsflächen (5, 6) interferometrisch vermessen werden kann.

10. Verfahren nach einem der vorhergehenden Ansprüche, wobei die Referenzstrukturen (13) so ausgestaltet werden, dass anhand der Referenzstrukturen (13) die Form und/oder Position und/oder Orientierung zumindest einer der optischen Funktionsflächen (5, 6) relativ zu den Referenzstrukturen (13) bezüglich einer, zweier oder aller Raumrichtungen eindeutig bestimmbar ist.

11. Verfahren nach einem der vorhergehenden Ansprüche, wobei zum Bestimmen der Abweichung zunächst die Referenzstrukturen (13) vermessen werden und dann die optischen Funktionsflächen (5, 6) in Relation zu den Referenzstrukturen (13) vermessen werden, wobei mittels der Referenzstrukturen (13) zunächst eine Position eines Koordinatenursprungs bestimmt wird, der während der Prozessschritte mit Bezug auf die Bearbeitungsmaschine (15) eindeutig definiert ist, und dann die optischen Funktionsflächen (5, 6) in Relation zu dem Koordinatenursprung vermessen werden.

12. Verfahren zur Herstellung eines optischen Gerätes mit einer optischen Anordnung mit mindestens zwei in fester Lagebeziehung zueinander auf einer gemeinsamen Tragstruktur (9) angeordneten Spiegeln, bei dem die optische Anordnung nach einem Verfahren nach einem der vorhergehenden Ansprüche hergestellt wird,
wobei zusätzlich zu den die Spiegel bildenden optischen Funktionsflächen (5, 6) und der mindestens einen Referenzstruktur (13) durch die Bearbeitungsmaschine (15) zumindest eine weitere Struktur auf oder an der Tragstruktur (9) hergestellt wird
und wobei beim Vermessen der optischen Funktionsflächen (5, 6) auch eine Abweichung der weiteren Struktur von einer Sollform und Solllage relativ zur mindestens einen Referenzstruktur (13) bestimmt wird, wobei die zumindest eine weitere Struktur eine Anlagegeometrie bildet, an der anliegend die Tragstruktur (9) in das optische Gerät eingesetzt wird und durch die eine Lage der Tragstruktur (9) im optischen Gerät bezüglich zumindest eines Freiheitsgrads festgelegt wird.

13. Verfahren nach Anspruch 12, **dadurch gekennzeichnet, dass** die mindestens eine weitere Struktur auf einer an und/oder in der Tragstruktur (9) vorgesehenen kinematischen Entkopplung (12) gebildet wird.

14. Vorrichtung, die zur Durchführung eines Verfahrens nach einem der Ansprüche 1 bis 11 eingerichtet ist, wobei die Vorrichtung eine Bearbeitungsmaschine (15) zum Herstellen der mindestens zwei Funktionsflächen (5, 6) und der mindestens einen Referenzstruktur (13) sowie eine davon getrennt angeordnete oder in der Bearbeitungsmaschine (15) integrierte Messvorrichtung (16) zum Vermessen der Funktionsflächen (5, 6) und der mindestens einen Referenzstruktur (13) umfasst, wobei die Bearbeitungsmaschine (15) eingerichtet ist, in einem ersten Prozessschritt die erste optische Funktionsfläche (5) mit einer Form herzustellen, die durch eine von Einstellungswerten der Bearbeitungsmaschine (15) abhängige Ansteuerung der Bearbeitungsmaschine (15) definiert ist, in einem zweiten Prozessschritt die zweite optische Funktionsfläche (6) mit durch die Ansteuerung der Bearbeitungsmaschine (15) definierter Form und definierter relativer Lage zur ersten Funktionsfläche (5) herzustellen und in einem dritten Prozessschritt die mindestens eine Referenzstruktur (13) mit definierter und messbarer relativer Lage zu den optischen Funktionsflächen (5, 6) herzustellen, so dass die mindestens eine Referenzstruktur zumindest einen Punkt und/oder zumindest eine Linie und/oder zumindest eine Fläche definiert,
und wobei die Messvorrichtung (16) programmtechnisch eingerichtet ist, die Abweichung der optischen Funktionsflächen (5, 6) gegenüber einer relativ zu der mindestens einen Referenzstruktur (13) definierten Sollform und Sollposition zu bestimmen und korrigierte Einstellungswerte für die Bearbeitungsmaschine (15) zu berechnen, und wobei die Bearbeitungsmaschine eingerichtet ist, die genannten drei Prozessschritte mit einer geänderten Ansteuerung zu wiederholen, so dass die gemessene Abweichung verringert wird.

15. Vorrichtung nach Anspruch 14, **dadurch gekennzeichnet, dass** die Messvorrichtung (16) programmtechnisch eingerichtet ist, die ermittelte Abweichung in ein durch Freiheitsgrade der Bearbeitungsmaschine (15) definiertes Koordinatensystem zu transformieren.

## Claims

1. A method for manufacturing an optical arrangement (4) with at least two mirrors which are formed by optical functional surfaces (5, 6) of a defined shape and which are arranged on a common support structure (9) in a fixed positional relation to one another,
wherein in the method:
in a first process step, by way of a machine tool (15), a first optical functional surface (5) with a shape defined by an activation of a machine tool (15) is manufactured from a blank which is at least one of formed by the support structure (9) and arranged on the support structure (9),
in a second process step, by way of the machine tool (15), at least one second optical functional surface (6) with a shape defined by the activation of the machine tool (15) and with a defined relative position to the first functional surface (5) is manufactured from at least one of the mentioned blank and a further blank which is arranged on the support structure (9), and
in a third process step, by way of the machine tool (15), at least one reference structure (13) with a defined and measurable relative position to the optical functional surfaces (5, 6) is at least one of manufactured on and/or at the support structure (9), and/or the blank and/or the further blank, such that the at least one reference structure defines at least one point and/or at least one line and/or at least one surface,
wherein the support structure (9) remains fixedly connected to the machine tool (15) until completion of the mentioned three process steps which are carried out in at least one of an arbitrary temporal sequence and simultaneously; and
wherein subsequently the shape and the position of the at least two optical functional surfaces (5, 6) on the support structure (9) relative to the at least one reference structure (13) is measured in a measurement construction and a deviation of the optical functional surfaces (5, 6) from a desired shape or desired position, which is defined in an exact manner relative to the at least one reference structure (13), is determined, whereafter the mentioned three process steps are repeated at least once with an activation of the machine tool (15) which is changed in a manner such that the mentioned deviation is reduced.

2. The method according to the preceding claim, **characterized in that** the determining of the deviation and the subsequent repetition of the three mentioned process steps with a changed activation of the machine tool (15) is effected several times in a deterministic manner, until the remaining deviation drops below a defined tolerance.

3. The method according to one of the preceding claims, **characterized in that** at least one of the blank and/or the further blank is arranged on the support structure (9) connected to the machine tool (15) only after the beginning or completion of at least one of the mentioned process steps.

4. The method according to one of the preceding claims, wherein at least one of the mentioned process steps is carried out by a turning tool (18) of the machine tool (15) or by a milling tool (19) of the machine tool (15).

5. The method according to one of the preceding claims, **characterized in that** the process steps for structuring the optical functional surfaces (5, 6) and the at least one reference structure (13) are partly carried out with at least one turning tool (18) and partly with at least one milling tool (19) of the machine tool (15), wherein the machining by way of the turning tool (18) and the milling tool (19) are carried out at least one of successively and alternatingly in a fixed tool arrangement

6. The method according to one of the preceding claims, wherein the optical functional surfaces (5, 6) are at least one of shaped in a planar manner; shaped in a concave manner; shaped in a convex manner; shaped in a free manner; and formed with a combination of such shapes.

7. The method according to one of the preceding claims, wherein the at least one reference structure (13) forms at least one spherically concave surface and/or at least one cylinder-shaped surface or is designed in a cross-shaped manner.

8. The method according to one of the preceding claims, **characterized in that** the at least one of the at least one reference structure (13) and/or the optical functional surfaces (5, 6) are measured in at least one of a tactile manner; and/or in an interferometric manner and/or by way of imaging optics, for determining the mentioned deviation.

9. The method according to one of the preceding claims, wherein the at least one reference structure (13) is at least one of manufactured with optical surface quality and/or manufactured such that together with at least one of the optical function surfaces (5, 6) it may be measured interferometrically.

10. The method according to one of the preceding claims, wherein the reference structures (13) are designed such that the shape and/or position and/or orientation of at least one of the optical surfaces (5, 6) relative to the reference structures (13) with respect to one, two or all spatial directions can be unambiguously determined by way of the reference structures (13).

11. The method according to one of the preceding claims, wherein firstly the reference structures (13) are measured and then the optical functional surfaces (5, 6) are measured in relation to the reference structures (13), for determining the deviation, wherein, by means of the reference structures (13), firstly a position of a coordinate origin is determined, which during the process steps is unambiguously defined with respect to the machine tool (15), and then the optical functional surfaces (5, 6) are measured in relation to the coordinate origin.

12. A method for manufacturing an optical apparatus including an optical arrangement with at least two mirrors which are arranged on a common support structure (9) in a fixed positional relation to one another, wherein the optical arrangement is manufactured by a method according to one of the preceding claims,
wherein at least one further structure is manufactured by the machine tool (15) on or at the support structure (9) in addition to the optical functional surfaces (5, 6) forming the mirrors and the at least one reference structure (13),
and, wherein, a deviation of the at least one further structure from a desired shape and a desired position relative to the at least one reference structure (13) being also determined on measurement,
wherein the at least one further structure forms a bearing-contact geometry, the support structure (9) bearing thereon being inserted into the optical apparatus and being fixed by way of the at least one position of the bearing structure (9) in the optical apparatus with respect to at least one degree of freedom.

13. The method of claim 12, **characterized in that** the at least one further structure is formed on a kinematic decoupling (12) which is provided on and/or in the support structure (9).

14. A device set up to carry out a method according to one of claims 1 to 11, the device comprising
a machine tool (15) for manufacturing the at least two functional surfaces (5, 6) and the at least one reference structure (13), and
a measurement device (16) which is one of arranged separate from the machine tool (15) and integrated in the machine tool (15), for measuring the functional surfaces (5, 6) and the at least one reference structure (13),
wherein the machine tool (15) is set up, in a first process step, to manufacture the first optical functional surface (5) with a shape defined by an activation of the machine tool (15) as a function of setting values of the machine tool (15), in second process step, manufacture the second optical functional surface (6) with a shape defined by the activation of the machine tool (15) and a defined relative position to the first functional surface (5) and, in a third process step, manufacture the at least one reference structure (13) with a defined and measurable relative position to the optical functional surfaces (5, 6), such that the at least one reference structure defines at least one point and/or at least one line and/or at least one surface,
and wherein the measurement device (15) with regard to programming technology is set up to determine the deviation of the optical functional surfaces (5, 6) compared to a desired shape and desired position which are defined relative to the at least one reference structure (13) and to compute corrected setting values for the machine tool (15), and wherein the machine tool is set up to repeat the mentioned three process steps with an activation which is changed in a manner such that the mentioned deviation is reduced.

15. A device according to claim 14, **characterized in that** the measurement device (16) with regard to programming technology is set up to transform the determined deviation into a coordinate system defined by degrees of freedom of the machine tool (15).

## Revendications

1. Procédé de fabrication d'un ensemble optique (4) avec au moins deux miroirs, positionnés de manière fixe l'un par rapport à l'autre sur une structure support (9) commune, qui sont formés par des surfaces fonctionnelles (5, 6) optiques de forme définie,
où, lors du procédé,
dans une première étape de procédé, une première surface fonctionnelle (5) optique avec une forme définie par une commande d'une machine de traitement (15) est fabriquée par la machine de traitement (15) à partir d'une pièce brute formée par la structure support (9) ou disposée sur la structure support (9),
dans une deuxième étape de procédé, au moins une deuxième surface fonctionnelle (6) optique avec une forme définie par la commande de la machine de traitement (15) et une localisation relative définie par rapport à la première surface fonctionnelle (5) est fabriquée par la machine de traitement (15) à partir de ladite pièce brute ou d'une nouvelle pièce brute disposée sur la structure support (9), et
dans une troisième étape de procédé, au-dessus et/ou sur la structure support (9) et/ou la pièce brute, et/ou la nouvelle pièce brute, au moins une structure de référence (13) avec une position relative par rapport aux surfaces fonctionnelles (5, 6) optiques définie et mesurable est fabriquée par la machine de traitement (15), de sorte que l'au moins une structure de référence définit au moins un point, et/ou au moins une ligne, et/ou au moins une surface,
où la structure support (9) reste solidement reliée avec la machine de traitement (15) jusqu'à l'achèvement de toutes les dites trois étapes de procédé qui sont effectuées dans une suite de temps choisie librement ou simultanément, et
où, ensuite, la forme et la localisation des au moins deux surfaces fonctionnelles (5, 6) optiques sur la structure support (9) sont mesurées dans un montage de mesure par rapport à l'au moins une structure de référence (13) et un écart des surfaces fonctionnelles (5, 6) optiques par rapport à une forme souhaitée et une position souhaitée, qui sont exactement définies par rapport à l'au moins une structure de référence (13), est évalué,
après quoi, lesdites trois étapes de procédé sont répétées au moins une fois avec une commande de la machine de traitement (15) modifiée de telle manière que ledit écart est diminué.

2. Procédé selon la revendication précédente, **caractérisé en ce que** l'évaluation de l'écart et la répétition ultérieure des trois dites étapes de procédé avec une commande modifiée de la machine de traitement (15) sont effectuées plusieurs fois de manière déterministe jusqu'à ce que l'écart restant se situe en dessous d'une tolérance prédéfinie.

3. Procédé selon l'une des revendications précédentes, **caractérisé en ce que** la pièce brute, et/ou la nouvelle pièce brute, est disposée sur la structure support (9) reliée avec la machine de traitement (15) uniquement après le début ou la fin d'au moins une des dites étapes de procédé.

4. Procédé selon l'une des revendications précédentes, dans lequel au moins une des dites étapes de procédé est effectuée par un outil rotatif (18) de la machine de traitement (15) ou par un outil de fraisage (19) de la machine de traitement (15).

5. Procédé selon l'une des revendications précédentes, **caractérisé en ce que** les étapes de procédé pour la structuration des surfaces fonctionnelles (5, 6) optiques et de l'au moins une structure de référence (13) sont effectuées partiellement avec au moins un outil rotatif (18) et partiellement avec au moins un outil de fraisage (19) de la machine de traitement (15), où les traitements par l'outil rotatif (18) et l'outil de fraisage (19) sont effectués l'un après l'autre ou alternativement dans un ensemble d'outils fixes.

6. Procédé selon l'une des revendications précédentes, dans lequel les surfaces fonctionnelles (5, 6) optiques sont formées planes, ou concaves, ou convexes, ou librement ou avec une combinaison de telles formes.

7. Procédé selon l'une des revendications précédentes, dans lequel l'au moins une structure de référence (13) forme une surface sphérique concave, et/ou au moins une surface en forme de cylindre, ou en forme de croix.

8. Procédé selon l'une des revendications précédentes, **caractérisé en ce que** l'au moins une structure de référence (13), et/ou les surfaces fonctionnelles (5, 6) optiques, sont mesurées de manière tactile et/ou interférométrique, et/ou au moyen d'une optique de reproduction, pour l'évaluation dudit écart.

9. Procédé selon l'une des revendications précédentes, dans lequel l'au moins une structure de référence (13) est fabriquée avec une qualité de surface optique, et/ou est fabriquée de telle manière qu'elle peut être mesurée de manière interférométrique ensemble avec au moins l'une des surfaces fonctionnelles (5, 6) optiques.

10. Procédé selon l'une des revendications précédentes, dans lequel les structures de références (13) sont conçues de telle manière qu'au moyen des structures de référence (13), la forme et/ou la position, et/ou l'orientation, d'au moins une des surfaces fonctionnelles (5, 6) optiques par rapport aux structures de référence (13) peuvent être déterminées sans équivoque en ce qui concerne une, deux ou toutes les directions spatiales.

11. Procédé selon l'une des revendications précédentes, dans lequel, pour l'évaluation de l'écart, on mesure d'abord les structures de référence (13), et ensuite les surfaces fonctionnelles (5, 6) optiques sont mesurées par rapport aux structures de référence (13), où, au moyen des structures de référence (13), on détermine d'abord une position d'une origine de coordonnées qui est définie sans équivoque pendant les étapes de procédé en se référant à la machine de traitement (15), et ensuite, les surfaces fonctionnelles (5, 6) optiques sont mesurées par rapport à l'origine de coordonnées.

12. Procédé de fabrication d'un appareil optique avec un ensemble optique doté d'au moins deux miroirs disposés de manière fixe l'un par rapport à l'autre sur une structure support (9) commune, dans lequel l'ensemble optique est fabriqué d'après un procédé selon l'une des revendications précédentes,
où, complémentairement aux surfaces fonctionnelles (5, 6) optiques formant le miroir et à l'au moins une structure de référence (13), au moins une nouvelle structure est fabriquée au dessus ou sur la structure support (9) par la machine de traitement (15) et où, lors de la mesure des surfaces fonctionnelles (5, 6) optiques, on évalue également un écart de la nouvelle structure par rapport à une forme souhaitée et une localisation souhaitée par rapport à l'au moins une structure de référence (13),
où l'au moins une nouvelle structure forme une géométrie d'installation dans laquelle la structure support (9) est insérée de manière adjacente dans l'appareil optique et par laquelle une position de la structure support (9) est fixée dans l'appareil optique en ce qui concerne au moins un degré de liberté.

13. Procédé selon la revendication 12, **caractérisé en ce que** l'au moins une nouvelle structure est formée au-dessus d'un découplage (12) cinématique prévu sur et/ou dans la structure support (9).

14. Dispositif qui
est conçu pour l'exécution d'un procédé selon l'une des revendications 1 à 11, où le dispositif comprend une machine de traitement (15) pour la fabrication des au moins deux surfaces fonctionnelles (5, 6) et de l'au moins une structure de référence (13), ainsi qu'un dispositif de mesure (16) disposé séparé de la machine de traitement (15) ou intégré dans celle-ci pour la mesure des surfaces fonctionnelles (5, 6) et de l'au moins une structure de référence (13),
où la machine de traitement (15) est conçue pour, dans une première étape de procédé, fabriquer la première surface fonctionnelle (5) optique avec une forme qui est définie par une commande de la machine de traitement (15) dépendant de valeurs de réglage de la machine de traitement (15), dans une deuxième étape de procédé, fabriquer la deuxième surface fonctionnelle (6) optique avec une forme qui est définie par une commande de la machine de traitement (15) et à une position relative définie par rapport à la première surface fonctionnelle (5), et dans une troisième étape de procédé, fabriquer l'au moins une structure de référence (13) avec une position relative définie et mesurable par rapport aux surfaces fonctionnelles (5, 6) optiques de sorte que l'au moins une structure de référence définit au moins un point, et/ou au moins une ligne, et/ou au moins une surface,
et où le dispositif de mesure (16) est conçu pour calculer, par une technique de programmation, l'écart des surfaces fonctionnelles (5, 6) optiques par rapport à une forme souhaitée et à une position souhaitée définies relativement par rapport à l'au moins une structure de référence (13), pour la machine de traitement 15), et où la machine de traitement est conçue pour répéter les dites trois étapes de procédé avec une commande modifiée de sorte que l'écart mesuré est diminué.

15. Dispositif selon la revendication 14, **caractérisé en ce que** le dispositif de mesure (16) est conçu pour transformer, par une technique de programmation, l'écart évalué en un système de coordonnées défini par un degré de liberté de la machine de traitement (15).
